# EUROPÄISCHE PATENTANMELDUNG

(11) **EP 1 962 065 A2**
(43) Veröffentlichungstag der Anmeldung: **27.08.2008**
(21) Anmeldenummer: 08000714.9
(22) Anmeldetag: 16.01.2008
(51) Int. Cl.: G01F 23/284

(54) **Antenna für ein nach dem Radar-Prinzip arbeitendes Füllstandsmessgerät**

(30) Priorität: 23.02.2007 DE 102007009363
(71) Anmelder: KROHNE MESSTECHNIK GMBH & CO. KG, 47058 Duisburg (DE)
(72) Erfinder: Gerding, Michael, 44623 Herne (DE); Matt, Achim, Dipl.-Ing., 47055 Duisburg (DE); Musch, Thomas, Dr., 45481 Mülheim/Ruhr (DE)
(74) Vertreter: Gesthuysen, von Rohr & Eggert

(57) **Zusammenfassung**

Die Erfindung betrifft eine Antenne für ein nach dem Radar-Prinzip arbeitendes Füllstandsmeßgerät, mit einem dielekuischen Einsatz (2), Erfindungsgemäß ist eine Befestigungseinrichtung zur lösbaren Befestigung des dielektrischen Einsatzes (2) in der Antenne vorgesehen, wie eine umlaufende Klemmwulst (3), mit der der dielektrische Einsatz (2) in der Hornantenne (I) verklemmt ist. Auf diese Weise wird eine einfache und universelle Befestigungsmöglichkeit für einen dielektrischen Einsatz in einer Antenne bereitgestellt.

## Beschreibung

Die Erfindung betrifft eine Antenne für ein nach dem Radar-Prinzip arbeitendes Füllstandsmeßgerät, mit einem dielektrischen Einsatz.

Eine Hornantenne für ein Radar-Gerät, deren Antennenhohlraum wenigstens teilweise mit einem dielektrischen Einsatz ausgefüllt ist, ist z. B. aus der DE 100 57 441 A1 bekannt. Derartige Radar-Füllstandsmeßgeräte werden zur Füllstandsmessung von Flüssigkeiten und Schüttgütern verwendet. Dazu wird über eine Antenne Mikrowellenstrahlung ausgesandt und nach Reflektion an der Oberfläche des zu detektierenden Mediums wieder erfaßt. Damit kann z.B. durch eine Laufzeitmessung auf den Füllstand des Mediums rückgeschlossen werden.

Wie in der DE 100 57 441 A1 beschrieben, existieren verschiedene Anwendungsfälle, in denen die Antenne eines nach dem Radar-Prinzip arbeitenden Füllstandsmeßgeräts mit einem dielektrischen Einsatz versehen werden soll. In dieser Druckschrift ist nun beschrieben, das dielektrische Material z. B. in den Innenraum der Antenne einzugießen. Weiterhin ist beschrieben, einen dielektrischen Einsatz in einer Antenne durch Einbrennen oder Einsintern zu befestigen. Außerdem beschreibt diese Druckschrift, die Außenseite des dielektrischen Einsatzes mit einer leitfähigen Schicht zu überziehen, wie es z. B. in der DE 196 17 963 A1 vorgeschlagen wird.

In der Praxis hat sich jedoch gezeigt, daß derartige Verbindung problembehaftet sind, nämlich entweder die dielektrischen Eigenschaften und damit z. B. die Abstrahlcharakteristik negativ beeinflussen oder je nach Befestigungsart nur bestimmte dielektrische Materialien zulassen.

Vor dem Hintergrund der zuvor geschilderten Problematik stellt sich damit die Aufgabe, eine einfache und universell einsetzbare Befestigungsmöglichkeit für einen dielektrischen Einsatz in einer Antenne anzugeben.

Ausgehend von der eingangs beschriebenen Antenne ist diese Aufgabe dadurch gelöst, daß eine Befestigungseinrichtung zur lösbaren Befestigung des dielektrischen Einsatzes in der Antenne vorgesehen ist.

Die Erfindung löst sich damit von dem Prinzip, die Antenne praktisch dauerhaft mit dem dielektrischen Einsatz zu verbinden. Vielmehr soll nämlich eine lösbare Befestigung vorgesehen werden, und zwar mittels einer Befestigungseinrichtung, die die Fixierung des dielektrischen Einsatzes in der Antenne gewährleistet.

Grundsätzlich ist die Erfindung auch für dielektrische Antennen anwendbar. Gemäß einer bevorzugten Weiterbildung der Erfindung ist jedoch vorgesehen, daß als Antenne eine metallische Antenne verwendet wird. Weiterhin ist die Erfindung für unterschiedliche Antennenformen anwendbar. Gemäß einer bevorzugten Weiterbildung der Erfindung ist jedoch als Antenne eine Hornantenne vorgesehen.

Grundsätzlich kann ein derartiger dielektrischer Einsatz vorgesehen sein, der den Innenraum der Antenne nur teilweise ausfüllt. Gemäß einer bevorzugten Weiterbildung der Erfindung ist jedoch ein derartiger dielektrischer Einsatz vorgesehen, der den Innenraum der Antenne vollständig ausfüllt.

Als Befestigungseinrichtungen zur lösbaren Befestigung des dielektrischen Einsatzes in der Antenne können nun funktional und körperlich unterschiedlich ausgestaltete Einrichtungen vorgesehen sein. Gemäß einer bevorzugten Weiterbildung der Erfindung ist z. B. vorgesehen, daß die Befestigungseinrichtung von einer Klemmwulst gebildet wird, mit Hilfe derer der dielektrische Einsatz in der Antenne verklemmt ist. Vorzugsweise kann es dabei vorgesehen' sein, daß die Klemmwulst einstückig an dem dielektrischen Einsatz angeformt ist, insbesondere also auch aus dem gleichen Material wie der dielektrische Einsatz ausgebildet ist.

Dabei ist es grundsätzlich möglich, daß sich die Klemmwulst nur über einen Teil des Umfangsbereichs des dielektrischen Einsatzes erstreckt. Gemäß einer bevorzugten Weiterbildung der Erfindung ist jedoch vorgesehen, daß sich die Klemmwulst über den gesamten Außenumfang des dielektrischen Einsatzes erstreckt. Vorzugsweise greift die Klemmwulst in eine Klemmausnehmung ein.

Im übrigen kann gemäß einer bevorzugten Weiterbildung der Erfindung als Klemmwulst auch ein zwischen der Innenwand der Antenne und der Außenwand des dielektrischen Einsatzes wirkender O-Ring vorgesehen sein. Vorzugsweise weisen dazu sowohl die Innenwand der Antenne als auch die Außenwand des dielektrischen Einsatzes jeweils eine entsprechende Ausnehmung auf, vorzugsweise in Form einer umlaufenden Nut, in die der O-Ring eingreift.

Weiterhin kann gemäß einer bevorzugten Weiterbildung der Erfindung auch vorgesehen sein, daß als Befestigungseinrichtung ein zwischen der Außenwand des dielektrischen Einsatzes und der Innenwand der Antenne wirkendes Schraubgewinde verwendet wird. Im allgemeinen wird man ein derartiges Schraubgewinde in einem zylinderförmigen Abschnitt des dielektrischen Einsatzes vorsehen, der sich im eingebauten Zustand des dielektrischen Einsatzes in einem entsprechenden zylindrischen Abschnitt eines Hohlleiters befindet, der das elektromagnetische Signal der Antenne zuführt.

Gemäß einer bevorzugten Weiterbildung der Erfindung kann als Befestigungseinrichtung auch eine in die Wand der Antenne eingeschraubte Klemmschraube vorgesehen sein, die gegen die Außenwand des dielektrischen Einsatzes drückt. Eine derartige Klemmschraube ist vorzugsweise von außerhalb der Antenne zugänglich, um eine einfache Betätigung zu gewährleisten. Vorzugsweise ist ferner eine Mehrzahl derartiger Klemmschrauben, vorzugsweise umfangsmäßig gleichmäßig verteilt, vorgesehen.

Schließlich ist gemäß einer bevorzugten Weiterbildung der Erfindung als Befestigungseinrichtung eine auf der Innenwand der Antenne vorgesehene Federeinrichtung vorgesehen, die auf die Außenwand des dielektrischen Einsatzes drückt. Hier gilt ebenfalls, daß vorzugsweise eine Mehrzahl derartiger Federeinrichtungen vorgesehen ist, die vorzugsweise ebenfalls umfangsmäßig gleichmäßig verteilt sind.

Nachfolgend werden bevorzugte Ausführungsbeispiele der Erfindung unter Bezugnahme auf die Zeichnung im. Detail erläutert. In der Zeichnung zeigt
- Fig. 1: schematisch eine Antenne für ein nach dem Radar-Prinzip arbeitendes Füllstandsmeßgerät gemäß einem ersten bevorzugten Ausführungsbeispiel der Erfindung in einer Längsschnittsansicht,
- Fig. 2: schematisch eine Antenne für ein nach dem Radar-Prinzip arbeitendes Füllstandsmeßgerät gemäß einem zweiten bevorzugten Ausführungsbeispiel der Erfindung in einer Längsschnittsansicht,
- Fig. 3: schematisch eine Antenne für ein nach dem Radar-Prinzip arbeitendes Füllstandsmeßgerät gemäß einem dritten bevorzugten Ausführungsbeispiel der Erfindung in einer Querschnittsansicht und
- Fig. 4: schematisch eine Antenne für ein nach dem Radar-Prinzip arbeitendes Füllstandsmeßgerät gemäß einem vierten bevorzugten Ausführungsbeispiel der Erfindung in einer Querschnittsansicht.

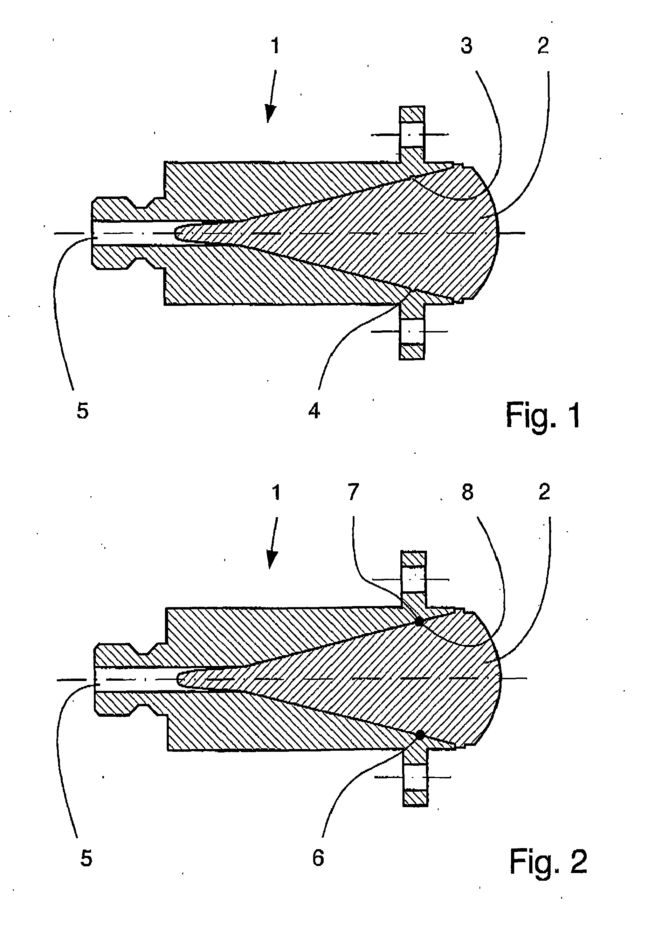

Aus Fig. 1 ist in einer Längsschnittsansicht eine Antenne für ein nach dem Radar-Prinzip arbeitendes Füllstandsmeßgerät ersichtlich. Dabei ist als Antenne eine Hornantenne 1 vorgesehen, in die ein dielektrischer Einsatz 2 aus PTFE eingesetzt ist. Der dielektrische Einsatz 2 ist in der Homantenne 1 lösbar befestigt, wozu gemäß dem vorliegend beschriebenen ersten bevorzugten Ausführungsbeispiel der Erfindung als Befestigungseinrichtung eine umlaufende Klemmwulst 3 vorgesehen ist. Diese Klemmwulst 3 ist einstückig an die Außenwand des dielektrischen Einsatzes angeformt und besteht ebenfalls aus PTFE. In der Innenwand der Hornantenne 1 ist eine der Klemmwulst 3 entsprechende Klemmausnehmung 4 vorgesehen, in die die Klemmwulst 3 eingreift.

Bei der Ausgestaltung der Homantenne 1 aus einem Metall, wie Edelstahl, und der vorliegend beschriebenen Fertigung des dielektrischen Einsatzes 2 aus PTFE kommt es aufgrund einer gewissen mit dem Material PTFE verbundenen Elastizität und Nachgiebigkeit dazu, daß der dielektrische Einsatz 2 unter leichter Kraftanwendung in das Innere der Homantenne 1 eingeschoben werden kann. Ein Lösen des dielektrischen Einsatzes 2, um diesen aus der Hornantenne 1 zu entnehmen, ist z. B. dadurch möglich, daß mit einem geeigneten Stab von der Hohlleiterseite der Homantenne 1 her, also von dort, wo zur Zuführung des Mikrowellensignals ein Hohlleiter 5 an die Homantenne 1 angrenzt, auf den dielektrischen Einsatz 2 gedrückt wird.

Aus Fig. 2 ist nun eine Antenne gemäß einem zweiten bevorzugten Ausführungsbeispiel der Erfindung ersichtlich, bei der als Klemmwulst ein umlaufender O-Ring 6 vorgesehen ist. Der O-Ring 6 kann z. B. aus einem FluorElastomer hergestellt sein und greift sowohl auf Seiten der Hornantenne 1 als auch auf der Seite des dielektrischen Einsatzes 2 in jeweilige umlaufende Nuten 7, 8 ein. Die Befestigung und das Lösen des dielektrischen Einsatzes in der Hornantenne 2 erfolgt entsprechend zu dem zuvor beschriebenen ersten bevorzugten Ausführungsbeispiel der Erfindung.

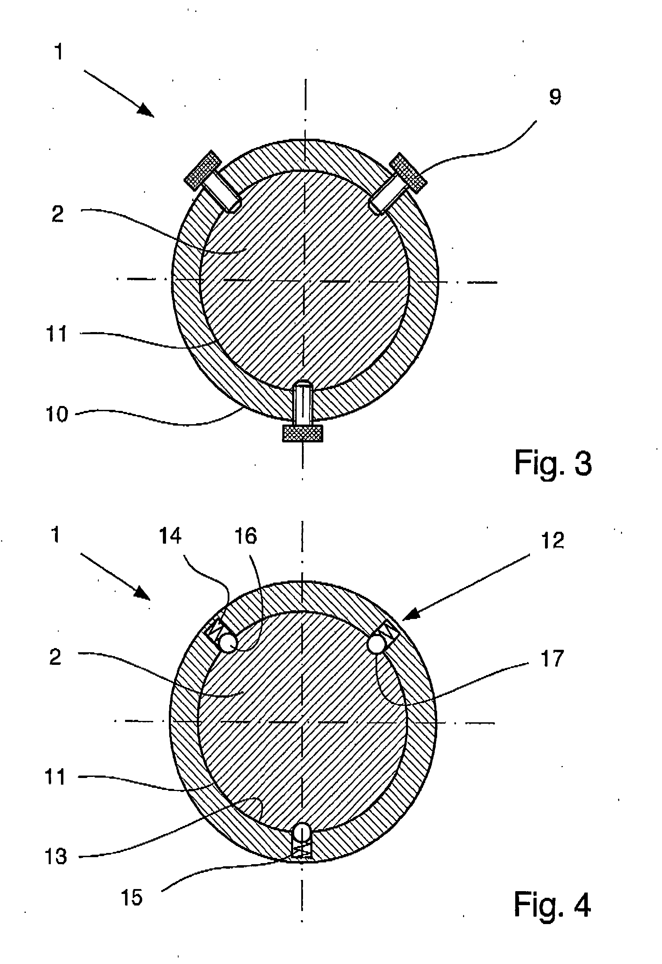

In Fig. 3 ist nun schematisch dargestellt, wie bei einer Antenne gemäß einem dritten bevorzugten Ausführungsbeispiel der Erfindung der dielektrische Einsatz 2 in der Hornantenne 1 mittels Klemmschrauben 9 gehalten ist. Wie der gezeigten Querschnittsdarstellung entnehmbar, sind die Klemmschrauben 9 durch die Wand 10 der Hornantenne 1 hindurchgeführt, so daß sie eine Klemmkraft auf die Außenwand 1 des dielektrischen Einsatzes 2 ausüben können. Auf diese Weise sind die Klemmschrauben 9 von außen einfach zugänglich, so daß sie leicht betätigbar sind.

Aus Fig. 4 ist schließlich eine Antenne gemäß einem vierten bevorzugten Ausführungsbeispiel der Erfindung ersichtlich, gemäß der als Befestigungseinrichtungen zur lösbaren Befestigung des dielektrischen Einsatzes 2 in der Hornantenne 1 Federeinrichtungen 12 vorgesehen sind. Diese sind auf der Innenwand 13 der Hornantenne 1 vorgesehen. Dabei sind in der Innenwand 13 Ausnehmungen 14 bereitgestellt, die die Federelemente 15 der Federeinrichtungen 12 einschließlich der Klemmkugeln 16 der Federeinrichtungen 12 vollständig aufnehmen können. Auf diese Weise kann der dielektrische Einsatz 2 mit geringer Kraft in die Hornantenne 1 eingeschoben werden. Eine Befestigung des dielektrischen Einsatzes 2 an der Hornantenne 1 erfolgt dann durch das Einrasten der Klemmkugeln 16 in mit diesen korrespondierenden kalottenförmigen Ausnehmungen 17 in der Außenwand 11 des dielektrischen Einsatzes 2. Auf diese Weise kann insbesondere eine vorbestimmte Orientierung des dielektrischen Einsatzes 2 in der Hornantenne 1 gewährleistet werden.

## Patentansprüche

1. Antenne für ein nach dem Radar-Prinzip arbeitendes Füllstandsmeßgerät, mit einem dielektrischen Einsatz (2), **dadurch gekennzeichnet, daß** eine Befestigungseinrichtung zur lösbaren Befestigung des dielektrischen Einsatzes (2) in der Antenne vorgesehen ist.

2. Antenne nach Anspruch 1, **dadurch gekennzeichnet, daß** eine metallische Antenne vorgesehen ist.

3. Antenne nach Anspruch 1 oder 2, **dadurch gekennzeichnet, daß** als Antenne eine Hornantenne (1) vorgesehen ist.

4. Antenne nach einem der Ansprüche 1 bis 3, **dadurch gekennzeichnet, daß** der dielektrische Einsatz (2) den Innenraum der Antenne vollständig ausfüllt.

5. Antenne nach einem der Ansprüche 1 bis 4, **dadurch gekennzeichnet, daß** als Befestigungseinrichtung eine Klemmwulst (3) vorgesehen ist, mit Hilfe derer der dielektrische Einsatz (2) in der Antenne verklemmt ist.

6. Antenne nach Anspruch 5, **dadurch gekennzeichnet, daß** eine Klemmausnehmung (4) vorgesehen ist, in die die Klemmwulst (3) eingreift.

7. Antenne nach Anspruch 5 oder 6, **dadurch gekennzeichnet, daß** die Klemmwulst (3) einstückig an dem dielektrischen Einsatz (2) angeformt ist.

8. Antenne nach einem der Ansprüche 5 bis 7, **dadurch gekennzeichnet, daß** sich die Klemmwulst (3) über den gesamten Außenumfang des dielektrischen Einsatzes (2) erstreckt.

9. Antenne nach einem der Ansprüche 5 oder 6, **dadurch gekennzeichnet, daß** als Klemmwulst ein zwischen der Innenwand (13) der Antenne und der Außenwand (11) des dielektrischen Einsatzes (2) wirkender O-Ring (6) vorgesehen ist.

10. Antenne nach einem der Ansprüche 1 bis 4, **dadurch gekennzeichnet, daß** als Befestigungseinrichtung ein zwischen der Außenwand (11) des dielektrischen Einsatzes (2) und der Innenwand (10) der Antenne wirkendes Schraubgewinde vorgesehen ist.

11. Antenne nach einem der Ansprüche 1 bis 4, **dadurch gekennzeichnet, daß** als Befestigungseinrichtung eine in die Wand (10) der Antenne eingeschraubte Klemmschraube (9) vorgesehen ist, die gegen die Außenwand (11) des dielektrischen Einsatzes (2) drückt.

12. Antenne nach einem der Ansprüche 1 bis 4, **dadurch gekennzeichnet, daß** als Befestigungseinrichtung eine auf der Innenwand (13) der Antenne vorgesehene Federeinrichtung (12) vorgesehen ist, die auf die Außenwand (11) des dielektrischen Einsatzes (2) drückt.
